Europäisches Patentamt

European Patent Office

Office européen des brevets

(11) Veröffentlichungsnummer : **0 105 129**
B1

# (12) EUROPÄISCHE PATENTSCHRIFT

(45) Veröffentlichungstag der Patentschrift :
**12.11.86**

(21) Anmeldenummer : **83107675.7**

(22) Anmeldetag : **04.08.83**

(51) Int. Cl.⁴ : **B 60 T 11/18**, B 60 T 17/18,
B 60 T 17/04

(54) Hydraulische Bremseinrichtung.

(30) Priorität : **04.09.82 DE 3232935**

(43) Veröffentlichungstag der Anmeldung :
**11.04.84 Patentblatt 84/15**

(45) Bekanntmachung des Hinweises auf die Patenterteilung : **12.11.86 Patentblatt 86/46**

(84) Benannte Vertragsstaaten :
**DE FR GB**

(56) Entgegenhaltungen :
**DE-A- 2 245 623**
**DE-B- 1 135 317**
**GB-A- 2 088 982**
**US-A- 2 126 062**
**US-A- 2 184 042**
**US-A- 2 362 324**

(73) Patentinhaber : **ROBERT BOSCH GMBH**
**Postfach 50**
**D-7000 Stuttgart 1 (DE)**

(72) Erfinder : **Sandau, Hartmut, Dipl.-Ing.**
**Ludwigsburger Strasse 56**
**D-7141 Möglingen (DE)**

EP 0 105 129 B1

## Beschreibung

Die Erfindung betrifft eine hydraulische Bremseinrichtung gemäß dem Oberbegriff des Anspruchs 1.

Eine solche hydraulische Bremseinrichtung ist aus der US-A-2 362 324 bekannt. Dort ist eine im Zugfahrzeug angeordnete Druckmittelquelle über eine Leitungskupplung an die Anhängerbremsanlage angeschlossen, deren Drucküberträger aus einem zwei Bunde aufweisenden Kolben besteht. Der Raum zwischen den Bunden hat zu einem Druckmittelbehälter Verbindung. Ferner trennt der Kolben zwei Druckräume voneinander, von denen der eine mit der Druckmittelquelle, der andere mit dem Bremszylinder des Anhängers verbunden ist. Der Kolben kann sich aber an den Rändern leicht abnutzen und dadurch Lecköllverluste verursachen. Eine nicht ausreichende Übertragung des Drucks kann in Extremfällen eintreten. Insbesondere ist aber kein direkter Druckausgleich zwischen dem Raum zwischen den Bunden und dem mit der Anhängerbremsanlage verbundenen Druckraum möglich, sondern nur über den Behälter. Das Druckgleichgewicht zwischen diesen beiden Räumen kann sich dadurch nur relativ langsam einstellen.

Der Erfindung liegt die Aufgabe zugrunde eine hydraulische Bremseinrichtung zu schaffen, die kurze Ansprechzeiten aufweist. Sie soll möglichst einfach und kompakt bauen und geringe Lecköllverluste haben.

Diese Aufgabe wird durch die im Anspruch 1 gekennzeichneten Merkmale gelöst.

Die mit der Erfindung erzielten Vorteile bestehen insbesondere darin, daß kurze Ansprechzeiten der Bremseinrichtung des Anhängers möglich sind. Für das Zugfahrzeug und den Anhänger sind unterschiedliche Druckmittel verwendbar. Das bei abgestelltem Anhänger aus dem Speicher durchleckende Druckmittel wird im Behälter des Drucküberträgers aufgefangen, so daß die Kupplung nicht unter Druck steht und die Fahrzeuge jederzeit aneinander gekoppelt werden können. Der Speicher kann vor Fahrtantritt durch wiederholtes Bremsen wieder gefüllt werden.

Durch die in den Unteransprüchen aufgeführten Maßnahmen sind vorteilhafte Weiterbildungen und Verbesserungen der im Hauptanspruch angegebenen hydraulischen Bremseinrichtung möglich.

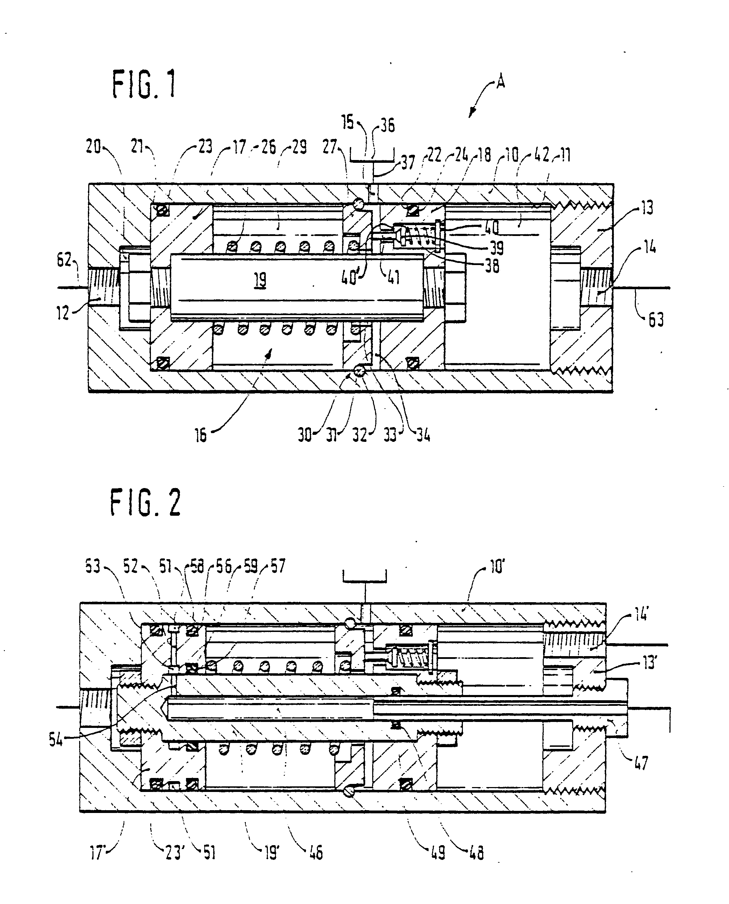

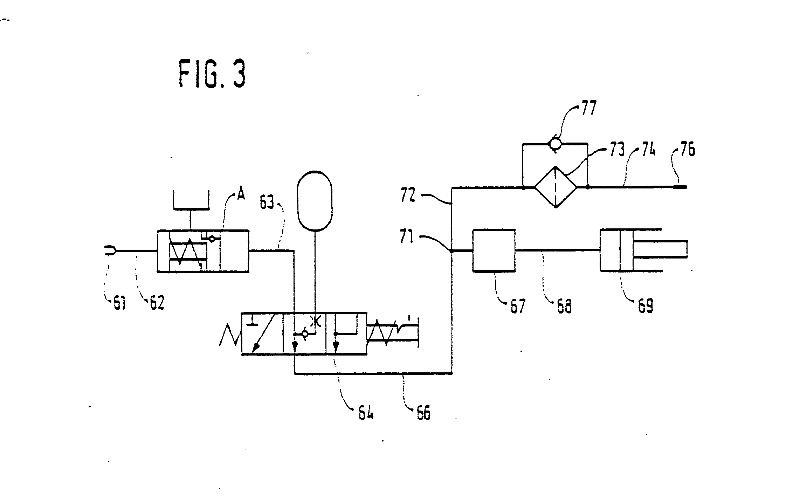

Ein Ausführungsbeispiel der Erfindung ist in der Zeichnung dargestellt und in der nachfolgenden Beschreibung näher erläutert. Figur 1 zeigt einen Längsschnitt durch einen Drucküberträger, Figur 2 eine Abwandlung des Ausführungsbeispiels nach Figur 1, und Figur 3 die Anordnung des Drucküberträgers in einer hydraulischen Bremseinrichtung.

## Beschreibung des Ausführungsbeispiels

In Figur 1 ist mit 10 das becherförmige Gehäuse eines Drucküberträgers A bezeichnet, das eine mittige Längsbohrung 11 aufweist. Auf der einen Seite geht die Längsbohrung 11 in eine mehrfach abgesetzte Einlaßbohrung 12 über. Auf der anderen Seite ist die Längsbohrung 11 durch einen Deckel 13 abgeschlossen, in dem sich eine achsgleiche, mehrfach abgesetzte Auslaßbohrung 14 befindet. Ungefähr in der Mitte der Längsseite des Gehäuses 10 befindet sich eine Bohrung 15, die in den Innenraum des Gehäuses 10 eindringt. In der Längsbohrung 11 ist dichtend ein Kolben 16 gelagert, der aus zwei Bunden 17 und 18 und einer zwischen diesen liegenden Stange 19 besteht. Der Kolben 16 schließt den Druckraum 20 des Druckmittels vom Zugfahrzeug ab. In den Bunden 17, 18 sind Ringnuten 21, 22 ausgebildet, in denen sich je ein dichtender O-Ring 23 bzw. 24 befindet. Die Stange 19 führt eine Feder 26, die sich mit ihrem einen Ende an den Bund 17 und mit ihrem anderen Ende an eine feststehende Scheibe 27 legt. Diese ist nahe der Bohrung 15 in einem Raum 29 angeordnet, der sich zwischen den Bunden 17, 18 befindet. Die Scheibe 27 stützt sich an einem als Schulter ausgebildeten Ring 31 ab, der teilweise in einer Ringnut 32 liegt. Der Raum 29 steht über einen Ringspalt 33 zwischen Stange 19 und Scheibe 27 mit dem Zwischenraum 34 und mit der Bohrung 15 in Verbindung. An diese schließt sich eine zu einem Behälter 36 verlaufende Leitung 37 an.

Im Bund 18 ist in einer durchgehenden Bohrung 40 ein von einer Feder 38 belastetes Sitzventil 39 angeordnet, dessen Stößel 41 mit der Scheibe 27 in Wirkverbindung steht.

Über das Sitzventil 39 wird ein zwischen dem Deckel 13 und dem Bund 18 gebildeter Druckraum 42 mit dem Zwischenraum 34 verbunden, wenn der Ventilkörper vom Ventilsitz 40' abgehoben ist.

Die Wirkungsweise des Drucküberträgers A ist wie folgt : Steht kein Bremsdruck über die Leitung 62 vom nicht dargestellten Zugfahrzeug an, so befindet sich der Kolben 16 in der in Figur 1 dargestellten Stellung. Das Sitzventil 39 stößt mit seinem Stößel 41 an die Scheibe 27. Dadurch wird die Kraft der Feder 38 überwunden, und das Sitzventil 39 wird geöffnet. Vom Raum 42 wird nun Verbindung hergestellt zum Behälter 36, wodurch stets Druckgleichgewicht zwischen den Räumen 29 und 42 hergestellt wird. Druckunterschiede in diesen Räumen, die durch Leckverluste entstehen, werden über den Behälter 36 ausgeglichen. Die in Figur 1 nicht dargestellte Bremsanlage des Anhängers ist somit über die Auslaßbohrung 14, den Druckraum 42 und das geöffnete Sitzventil 39 mit dem Zwischenraum 34 und dem Behälter 36 verbunden.

Wird im nicht dargestellten Zugfahrzeug das Bremspedal betätigt, so strömt Druckmittel vom Zugfahrzeug über die Leitung 62 und die Einlaßbohrung 12 in den Druckraum 20 und schiebt den Kolben 16, bezogen auf die Figur 1, nach rechts. Durch die Bewegung des Kolbens 16 hebt der Stößel 41 des Sitzventils 39 von der Scheibe 27 ab, so daß das Sitzventil 39 durch die Kraft der Feder 38 geschlossen wird. Durch die Bewegung des Kolbens 16 wird das im Druckraum 42 enthaltene Druckmittel über die Auslaßbohrung 14 in die Leitung 63 verdrängt und betätigt die in Figur 1 nicht dargestellte Bremsanlage des Anhängers. Der Bremsdruck aus der Zugfahrzeugbremsanlage wird somit über den Kolben 16 an die Anhängerbremsanlage weitergegeben. Die Feder 26 drückt die Scheibe 27 stets an die Schulter 30 des Rings 31.

Wird die Anhängerbremsanlage wieder entlastet, so bewegt sich der Kolben 16 infolge der Kraft der Feder 26 wieder in seine Ausgangsstellung nach links zurück.

Figur 2 zeigt eine gegenüber dem Ausführungsbeispiel nach Figur 1 geringfügig abweichende Ausführungsform. Die Stange 19' weist eine mittige Sackbohrung 46 auf, in die ein im Deckel 13' des Gehäuses 10' fest angeordnetes Lecköelrohr 47 eintaucht. Die Auslaßbohrung 14' im Deckel 13' ist nun außermittig angeordnet. Das Lecköelrohr 47 wird durch einen am vorderen Teil der Sackbohrung 46 in einer Ringnut 48 angeordneten O-Ring 49 abgedichtet. Hinter dem O-Ring 23' ist im Bund 17' eine Ringnut 51 ausgebildet, die über eine senkrecht verlaufende Bohrung 52 mit einer im Inneren des Bundes 17' befindlichen Ringnut 53 verbunden ist. Von dieser aus führt eine in der Stange 19' ausgebildeten Bohrung 54 in das Innere der Sackbohrung 46. Hinter den Ringnuten 51 und 53 sitzen dichtend in Ringnuten 56 und 57 O-Ringe 58 und 59.

In der in Figur 2 dargestellten Bauweise wird in der vom Druck entlasteten Ringnut 51 ein O-Ring 23' durchleckendes Druckmittel der Bremsanlage des Zugfahrzeuges aufgefangen. Dieses wird über die Bohrung 52, die Ringnut 53, die Sackbohrung 46 und das Lecköelrohr 47 in einen Behälter zurückgeführt. Dadurch wird eine auch nur geringfügige Vermischung des Druckmittels der Bremsanlage des Zugfahrzeuges und des Anhängers verhindert.

In Figur 3 ist der erfindungsgemäße Einbau des Drucküertragers A in die Anhängerbremsanlage schematisch dargestellt. Nach der Leitungskupplung 61, über die die Anhängerbremsanlage mit der Zugfahrzeugbremsanlage verbindbar ist, schließt sich über eine Leitung 62 der Drucküertrager A an. Von diesem aus wird über eine Leitung 63, ein Abreißbremsventil 64 und eine Leitung 66 Druckmittel zu einem Bremskraftregler 67 geführt. Weiterhin gelangt das Druckmittel durch die Leitung 68 zum Bremszylinder 69.

Von einer vor dem Bremskraftregler 67 angeordneten Abzweigung 71 kann über eine Leitung 72, einen Filter 73, eine Leitung 74 und eine Leitungskupplung 76 eine Verbindung zu einer weiteren Anhängerbremsanlage hergestellt werden. Ein Rückschlagventil (Bypaßventil) 77 bewirkt, daß das Druckmittel den Filter 73 nur in einer Richtung durchströmen kann, und somit der Schmutz herausgefiltert wird.

**Patentansprüche**

1. Hydraulische Bremseinrichtung für einen von einem Zugfahrzeug gezogenen Anhänger, mit einer Druckmittelquelle im Zugfahrzeug, die über eine Leitungskupplung an die Anhängerbremsanlage angeschlossen ist, welche einen Drucküertrager (A), ein Abreißbremsventil (64) und einen Bremszylinder (69) aufweist, wobei der Drucküertrager (A) aus einem zwei Bunde (17, 18) aufweisenden Kolben (16) besteht und der Raum (29) zwischen den Bunden (17, 18) zu einem Druckmittelbehälter (36) Verbindung hat und der Kolben (16) zwei Druckräume (20, 42) voneinander trennt, von denen der eine (29) mit der Druckmittelquelle, der andere (42) mit dem Bremszylinder (69) des Anhängers verbunden ist, dadurch gekennzeichnet, daß der mit dem Bremszylinder (69) verbundene Druckraum (42) über ein Sitzventil (39) mit dem Druckmittelbehälter (36) verbindbar ist, das in einem Durchgang des einen Bundes (18) angeordnet ist, und daß das Sitzventil (39) über einen Stößel (41) mit einer im Raum (29) zwischen den Bunden (17, 18) des Kolbens (16) feststehenden Scheibe (27) in Wirkverbindung steht.

2. Einrichtung nach Anspruch 1, dadurch gekennzeichnet, daß die Scheibe (27) durch eine Feder (26) gegen eine im Gehäuse des Drucküertragers (A) angeordneten Schulter (30) gedrückt ist, und daß sich die Feder (26) an der Innenseite eines der Bunde (17) abstützt.

3. Einrichtung nach Anspruch 1 und/oder 2, dadurch gekennzeichnet, daß der Kolben (16) eine mittige Sackbohrung (46) aufweist, in die ein in der Wand des Gehäuses (10) des Drucküertragers (A) fest angeordnetes Lecköelrohr (47) abgedichtet eintaucht.

**Claims**

1. Hydraulic brake device for a trailer pulled by a tractive vehicle, having a pressure medium source in the tractive vehicle, which pressure medium source is connected *via* a line coupling to the trailer brake system which has a pressure exchanger (A), a rapid-emergency brake valve (64) and a brake cylinder (69), with the pressure exchanger (A) consisting of a piston (16) having two collars (17, 18), the space (29) between the collars (17, 18) being connected to a pressure medium container (36) and the piston (16) separating two pressure spaces (29, 42), one (29) of which is connected to the pressure medium source and the other (42) is connected to the brake cylinder (69) of the trailer, characterized in that the pressure space (42) connected to the brake cylinder (69) can be connected *via* a seat valve (39) to the pressure medium container (36) which is arranged in a passage of one collar (18), and that the seat valve (39), *via* a tappet (41), is in active connection with a disc (27) fixed in the space (29) between the collars (17, 18) of the piston (16).

2. Device according to Claim 1, characterized in that the disc (27) is pressed by a spring (26) against a shoulder (30) arranged in the housing of the pressure exchanger (A), and that the spring (26) is supported on the inner side of one of the collars (17).

3. Device according to Claim 1 and/or 2, characterized in that the piston (16) has a central blind bore (46), into which an oil leakage pipe (47), which is firmly arranged in the wall of the housing (10) of the pressure exchanger (A), plunges in sealed manner.

**Revendications**

1. Installation de freinage hydraulique pour une remorque tirée par un véhicule tracteur, comportant, dans le véhicule tracteur, une source de fluide sous pression qui est raccordée, par l'intermédiaire d'un raccord de conduite, à l'installation de freinage de la remorque, qui présente un transmetteur de pression (A), un robinet pour freinage de sécurité (64) et un cylindre de frein (39), étant précisé que le transmetteur de pression (A) est constitué d'un piston (16) présentant deux collets (17, 18), que la chambre (29) située entre les collets (17, 18) est reliée à un réservoir de fluide sous pression (38) et que le piston (16) sépare l'une de l'autre deux chambres sous pression (20, 42) dont l'une (29) est reliée à la source de fluide sous pression et l'autre (42) au cylindre de frein (39) de la remorque, caractérisée en ce que l'on peut relier la chambre sous pression (42), reliée au cylindre de frein (69), au réservoir de fluide sous pression (36) par l'intermédiaire d'une soupape (69) disposée dans un passage de l'un des collets (18) ; et en ce que la soupape (69) est reliée activement, par l'intermédiaire d'une tige (41), avec un disque (27) fixe dans la chambre (29) située entre les collets (17, 18) du piston (16).

2. Installation selon la revendication 1, caractérisée en ce que le disque (27) est appuyé par un ressort (26) contre un épaulement (30) disposé dans le carter du transmetteur de pression (A) ; et en ce que le ressort (26) s'appuie contre la face intérieure de l'un des collets (17).

3. Installation selon la revendication 1 et/ou la revendication 2, caractérisée en ce que le piston (16) présente un alésage borgne axial (46) dans lequel plonge, avec étanchéité, un tube pour l'huile de fuite (47) fixé dans la paroi du carter (10) du transmetteur de pression (A).

# FIG. 1

# FIG. 2

# FIG. 3